(19) Europäisches Patentamt
European Patent Office
Office européen des brevets

(11) **EP 0 992 041 B1**

(12) **EUROPEAN PATENT SPECIFICATION**

(45) Date of publication and mention
of the grant of the patent:
**31.08.2005 Bulletin 2005/35**

(21) Application number: **98929110.9**

(22) Date of filing: **19.06.1998**

(51) Int Cl.7: **H01B 7/28**, H01B 3/44

(86) International application number:
**PCT/US1998/012904**

(87) International publication number:
**WO 1998/059348 (30.12.1998 Gazette 1998/52)**

(54) **TREE RESISTANT CABLE**

GEGEN DENDRITENBILDUNG WIDERSTANDSFÄHIGES KABEL

CABLE RESISTANT AUX ARBORESCENCES DUES A L'EAU

(84) Designated Contracting States:
**AT BE CH DE DK ES FR GB GR IE IT LI LU MC NL PT SE**

(30) Priority: **20.06.1997 US 879924**

(43) Date of publication of application:
**12.04.2000 Bulletin 2000/15**

(73) Proprietor: **UNION CARBIDE CHEMICALS & PLASTICS TECHNOLOGY CORPORATION Connecticut 06817-0001 (US)**

(72) Inventors:
• **GROSS, Laurence, Herbert**
 **Bridgewater, NJ 08807 (US)**
• **FURNO, John, Salvatore**
 **Somerset, NJ 08873 (US)**

(74) Representative: **Hayes, Adrian Chetwynd et al Boult Wade Tennant, Verulam Gardens 70 Gray's Inn Road London WC1X 8BT (GB)**

(56) References cited:
EP-A- 0 057 604    EP-A- 0 296 355
EP-A- 0 735 545    US-A- 4 305 849

• **PATENT ABSTRACTS OF JAPAN vol. 010, no. 321 (C-382), 31 October 1986 & JP 61 133253 A (FUJIKURA LTD), 20 June 1986**

## Description

### Technical Field

This invention relates to electric power cable insulated with a polyethylene composition having an improved resistance to water trees.

### Background Information

A typical electric power cable generally comprises one or more conductors in a cable core that is surrounded by several layers of polymeric material including a first semiconducting shield layer, an insulating layer, a second semiconducting shield layer, a metallic tape or wire shield, and a jacket.

These insulated cables are known to suffer from shortened life when installed in an environment where the insulation is exposed to water, e.g., underground or locations of high humidity. The shortened life has been attributed to the formation of water trees, which occur when an organic polymeric material is subjected to an electrical field over a long period of time in the presence of water in liquid or vapor form. The formation of water trees is believed to be caused by a complex interaction of the AC electrical field, moisture, time, and the presence of ions. The net result is a reduction in the dielectric strength of the insulation.

Many solutions have been proposed for increasing the resistance of organic insulating materials to degradation by water treeing. One solution involves the addition of polyethylene glycol, as a water tree growth inhibitor, to a low density polyethylene such as described in United States Patents 4,305,849; 4,612,139; and 4,812, 505. This solution has been successfully applied for many years, but there is a continuous industrial demand for improvement partially because power cable is increasingly exposed to harsher environments, and partially because consumers are more concerned with cable longevity, e.g., a service life of 40 to 50 years.

### Disclosure of the Invention

An object of this invention, therefore, is to provide a polyethylene composition, which, when converted to cable insulation, exhibits a much improved resistance to water trees. Other objects and advantages will become apparent hereinafter.

According to the invention, a composition has been discovered which meets the above object.

The composition comprises

(i) a homopolymer of ethylene made by a high pressure process, and, based on 100 parts by weight of component (i),
(ii) 2 to 15 parts by weight of a copolymer of ethylene and an acrylic acid ester or methacrylic acid ester, said ester being present in the copolymer in an amount of 10 to 30 percent by weight based on the weight of the copolymer; and
(iii) 0.03 to 0.3 part by weight of a polyethylene glycol having a molecular weight in the range of 1000 to 100,000.

### Description of the Preferred Embodiment(s)

Component (i) is a homopolymer of ethylene made by a conventional high pressure process. These high pressure processes are typically run at pressures above $1,03 \cdot 10^8 \ \frac{N}{m^2}$ (15,000 psi (pounds per square inch)). The homopolymer can have a density in the range of 0.860 to 0.940 gram per cubic centimeter, and preferably has a density in the range of 0.915 to 0.931 gram per cubic centimeter. The homopolymer can also have a melt index in the range of about 1 to about 5 grams per 10 minutes, and preferably has a melt index in the range of about 0.75 to about 3 grams per 10 minutes. Melt index is determined under ASTM D-1238, Condition E. It is measured at 190 degrees C and 2160 grams.

Component (ii), an acrylic acid ester or a methacrylic acid ester, is also made by a conventional high pressure process. The ester can have about 4 to about 20 carbon atoms, and preferably has about 4 to about 7 carbon atoms. The acrylic acid ester is preferred over the methacrylic acid ester. Examples of these esters are lauryl methacrylate; myristyl methacrylate; palmityl methacrylate; stearyl methacrylate; 3-methacryloxy-propyltrimethoxysilane; 3-methacryloxypropyltriethoxysilane; cyclohexyl methacrylate; n-hexylmethacrylate; isodecyl methacrylate; 2-methoxyethyl methacrylate; tetrahydrofurfuryl methacrylate; octyl methacrylate; 2-phenoxyethyl methacrylate; isobornyl methacrylate; isooctylmethacrylate; octyl methacrylate; isooctyl methacrylate; oleyl methacrylate; ethyl acrylate; methyl acrylate; t-butyl acrylate; n-butyl acrylate; and 2-ethylhexyl acrylate. Methyl acrylate, ethyl acrylate, and n- or t-butyl acrylate are preferred. In the case of alkyl acrylates and methacrylates, the alkyl group can have about 1 to about 8 carbon atoms, and preferably has about 1 to about 4 carbon atoms. As noted above, the alkyl group can be substituted with an oxyalkyltrialkoxysilane, for example.

Component (ii), i.e., the ethylene copolymer, can contain about 10 to about 30 percent by weight acrylic or methacrylic ester, and preferably contains about 15 to about 25 percent by weight acrylic or methacrylic ester. The percent is based on the weight of the copolymer.

The amount of component (ii) that can be in the insulating composition can be in the range of about 2 to about 15 parts by weight based on 100 parts by weight of component (i), and is preferably in the range of about 3 to about 8 parts by weight.

The amount of ester in the composition can be in the range of about 0.2 to about 5 parts by weight per 100 parts by weight of component (i), i.e., the homopolymer, and is preferably present in an amount of 0.4 to about 1 part by weight.

Generally, the polyethylene glycol is defined by its molecular weight, which can be in the range of about 1000 to about 100,000, and is preferably in the range of about 5000 to about 30,000. The optimum molecular weight is 20,000 (prior to processing). It will be understood by those skilled in the art that processing the polyethylene glycol reduces its molecular weight by one third to one half. Polyethylene glycol is a polar compound, which can be represented by the formulas $HOCH_2(CH_2OCH_2)_nCH_2OH$ or $HO(C_2H_4O)_nH$ wherein, for example, n can be 225 to 680. This translates into a molecular weight in the range of about 10,000 to about 30,000. The amount of polyethylene glycol that can be in the insulating composition can be in the range of about 0.03 to about 0.3 part weight based on 100 parts by weight of component (i), and is preferably in the range of about 0.05 to about 0.2 part by weight.

Conventional additives, which can be introduced into the polyethylene formulation, are exemplified by antioxidants, coupling agents, ultraviolet absorbers or stabilizers, antistatic agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Fillers and additives can be added in amounts ranging from less than about 0.1 to more than about 200 parts by weight for each 100 parts by weight of the base resin, in this case, polyethylene.

Examples of antioxidants are: hindered phenols such as tetrakis[methylene(3,5-di-tert- butyl-4-hydroxyhydrocinnamate)]methane, bis[(beta-(3,5-ditert-butyl-4-hydroxybenzyl)-methylcarboxyethyl)]sulphide, 4,4'-thiobis(2-methyl-6-tertbutylphenol), 4,4'-thiobis(2-tert-butyl-5-methylphenol), 2,2'-thiobis(4-methyl-6-tert-butylphenol), and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite; thio compounds such as dilaurylthiodipropionate, dimyristylthiodipropionate, and distearylthiodipropionate; various siloxanes; and various amines such as polymerized 2,2,4-trimethyl-1,2-dihydroquinoline. Antioxidants can be used in amounts of about 0.1 to about 5 parts by weight per 100 parts by weight of polyethylene.

The resins, i.e., components (i) and (ii), can be crosslinked by adding a crosslinking agent to the composition or by making the resin hydrolyzable, which is accomplished by adding hydrolyzable groups such as $-Si(OR)_3$ wherein R is a hydrocarbyl radical to the resin structure through copolymerization or grafting.

Suitable crosslinking agents are organic peroxides such as dicumyl peroxide; 2,5-dimethyl- 2,5-di(t-butylperoxy)hexane; t-butyl cumyl peroxide; and 2,5-dimethyl-2,5-di(t-butylperoxy)hexane-3. Dicumyl peroxide is preferred.

Hydrolyzable groups can be added, for example, by copolymerizing ethylene with an ethylenically unsaturated compound having one or more $-Si(OR)_3$ groups such as vinyltrimethoxysilane, vinyltriethoxysilane, and gamma-methacryloxypropyltrimethoxysilane or grafting these silane compounds to the resin in the presence of the aforementioned organic peroxides. The hydrolyzable resins are then crosslinked by moisture in the presence of a silanol condensation catalyst such as dibutyltin dilaurate, dioctyltin maleate, dibutyltin diacetate, stannous acetate, lead naphthenate, and zinc caprylate. Dibutyltin dilaurate is preferred.

Examples of hydrolyzable copolymers and hydrolyzable grafted copolymers are ethylene/vinyltrimethoxy silane copolymer, ethylene/gamma-inethacryloxypropyltrimethoxy silane copolymer, vinyltrimethoxy silane grafted ethylene/ethyl acrylate copolymer, vinyltrimethoxy silane grafted linear low density ethylene/1-butene copolymer, and vinyltrimethoxy silane grafted low density polyethylene.

The cable of the invention can be prepared in various types of extruders, e.g., single or twin screw types. Compounding can be effected in the extruder or prior to extrusion in a conventional mixer such as a Brabender™ mixer or a Banbury™ mixer. A description of a conventional extruder can be found in United States patent 4,857,600. A typical extruder has a hopper at its upstream end and a die at its downstream end. The hopper feeds into a barrel, which contains a screw. At the downstream end, between the end of the screw and the die, is a screen pack and a breaker plate. The screw portion of the extruder is considered to be divided up into three sections, the feed section, the compression section, and the metering section, and two zones, the back heat zone and the front heat zone, the sections and zones running from upstream to downstream. In the alternative, there can be multiple heating zones (more than two) along the axis running from upstream to downstream. If it has more than one barrel, the barrels are connected in series. The length to diameter ratio of each barrel is in the range of about 15:1 to about 30:1. In wire coating, where the material is crosslinked after extrusion, the die of the crosshead feeds directly into a heating zone, and this zone can be maintained at a temperature in the range of about 130°C to about 260°C, and preferably in the range of about 170°C to about 220°C.

The advantages of the invention lie in the much improved water tree growth rate, and in the use of less polyethylene glycol, unsaturated ester, and organic peroxide. The use of the invention can also result in reduced stiffness, longer screen pack life, ability to use finer screen packs, reduced tooling plate-out, avoidance of sweat-out problems, less contamination, increased cable run lengths, and lower additive costs.

The term "surrounded" as it applies to a substrate being surrounded by an insulating composition, jacketing material, or other cable layer is considered to include extruding around the substrate; coating the substrate; or wrapping around the substrate as is well known by those skilled in the art. The substrate can include, for example, a core including a conductor or a bundle of conductors, or various underlying cable layers as noted above.

All molecular weights mentioned in this specification are weight average molecular weights unless otherwise designated.

The invention is illustrated by the following examples.

**Examples 1 to 9**

The resistance of insulating compositions to water treeing is determined by the method described in United States Patent 4,144,202. This measurement leads to a value for water tree resistance relative to a standard polyethylene insulating material. The term used for the value is "water tree growth rate" (WTGR). From experience in laboratory tests of materials and for accelerated tests of cables, it has been established that the value for WTGR should be equal to or less than about 20 percent, preferably 10 percent, of the standard to provide a useful improvement in cable performance, i.e., in the life of a cable, which is in service and in contact with water during the period of the service.

Each formulation contains 100 parts by weight of an ethylene homopolymer having a density of 0.92 gram per cubic centimeter and a melt index of 2 grams per 10 minutes.

The formulation also contains a copolymer of ethylene and methyl acrylate (MA). The amount of copolymer and/or the percent by weight of MA in the copolymer is varied to provide 0.5 to 1.5 parts by weight of MA per 100 parts by weight of the ethylene homopolymer. The copolymer, containing 20 percent by weight of MA, will be referred to as Polymer A, which has a density of 0.94 gram per cubic centimeter and a melt index of 8 grams per 10 minutes. It is used in an amount of 2.5 to 7.5 parts by weight.

The homopolymer and the copolymer are compounded with polyethylene glycol (PEG) having a molecular weight of 20,000 (if the PEG is used) in a two roll mill operating at 24 revolutions per minute (rpm) on the front roll and 36 rpm on the back roll and a temperature of 125 to 130 degrees C on the two rolls for about 10 minutes. The procedure involves preheating the resin to 70 degrees C in an oven; fluxing the resin as quickly as possible on the two roll mill (about 3 to 4 minutes); adding all of the non-peroxide additives and fluxing for an additional 3 to 4 minutes; and then adding the peroxide and fluxing, peeling, and folding until well mixed. Sufficient dicumyl peroxide is introduced into each composition to provide an oscillating disk rheometer (5 degree arc at 360 degrees F) reading of 46 inch-pound. Each composition is then removed from the two roll mill as a crepe and diced and molded into one inch discs which are 0.25 inch thick in a press in two steps:

|  | initial step | final step |
|---|---|---|
| pressure (psi) | low | high |
| temperature (°C) | 120 | 175 |
| residence time (minutes) | 9 | 15 to 20 |

Each plaque is tested for WTGR and the results compared with a control polyethylene composition, which exhibits 100 percent WTGR. Variables and results are set forth in Table I. All the formulations contain antioxidant and peroxide. Further, pph = parts by weight per 100 parts by weight of ethylene homopolymer (all examples).

Table I

| Example | Polymer A | PEG | MA | WTGR |
|---|---|---|---|---|
|  | (pph) | (pph) | (pph) | (percent) |
| 1 | 2.6 | 0 | 0.5 | 96 |
| 2 | 3.9 | 0 | 0.8 | 93 |
| 3 | 4.6 | 0 | 0.9 | 41 |

Table I   (continued)

| Example | Polymer A | PEG | MA | WTGR |
|---------|-----------|-----|-----|------|
| | (pph) | (pph) | (pph) | (percent) |
| 4 | 5.3 | 0 | 1.1 | 60 |
| 5 | 6 | 0 | 1.2 | 44 |
| 6 | 6.7 | 0 | 1.3 | 35 |
| 7 | 8.1 | 0 | 1.6 | 51 |
| 8 | 2.6 | 0.05 | 0.5 | 20 |
| 9 | 2.6 | 0.2 | 0.5 | 9 |

**Examples 10 and 11**

The strip force of an insulation shield is an important quality for cable performance. Plaques are prepared with layers of the semiconductive material on the insulation material. A peel test, in which the force required to lift a 1/2 inch wide strip of the semiconductive material from the insulation, is used. The semiconductive material is conventional and contains about 30 to 40 percent by weight carbon black and about 60 to 70 percent by weight ethylene/vinyl acetate copolymer. The vinyl acetate is present in the copolymer in an amount of about 35 to 45 percent by weight based on the weight of the copolymer. All of the formulations used in the examples are formulated with antioxidant and with sufficient dicumyl peroxide to yield a 46 to 48 inch-pound oscillating disc rheometer value, and contain 100 parts by weight of the homopolymer of ethylene described in examples 1 to 10. MA and PEG are as described in examples 1 to 10.

Table II

| Polymer A (pph) | MA (pph) | PEG (pph) | WTGR (%) | Strip Force ($lb_f$/ 0.5 inch) |
|-----------------|----------|-----------|----------|-------------------------------|
| None | None | None | 150 to 200 | 6 |
| None | None | 0.6 | 10 | 9 |
| 6.7 | 1.3 . | None | 35 | No strip |
| 3.6 | 0.7 | None | 100 | 10 |
| 3.6 | 0.7 | 0.05 | 20 | 9 |
| (1 $lb_f$ /0.5 inch = 350,4 N/m) | | | | |

Homopolymer material yields strip forces in the range of 5 to 10 $lb_f$ (pound-force) per 0.5 inch. The use of the copolymer at sufficiently high levels to give a WTGR of 35 percent yields a formulation from which the semiconductive layer cannot be stripped. By decreasing the amount of copolymer and adding the PEG, the WTGR can be maintained and sufficiently low strip force can be attained.

**Claims**

1.  A composition comprising:

    (i) a homopolymer of ethylene made by a high pressure process, and, based on 100 parts by weight of component (i),
    (ii) 2 to 15 parts by weight of a copolymer of ethylene and an acrylic acid ester or methacrylic acid ester, said ester being present in the copolymer in an amount of 10 to 30 percent by weight based on the weight of the copolymer; and
    (iii) 0.03 to 0.3 part by weight of a polyethylene glycol having a molecular weight in the range of 1000 to 100,000.

2.  The composition defined in claim 1 wherein the homopolymer of ethylene has a density in the range of 0.860 to 0.940 gram per cubic centimeter and a melt index in the range of about 1 to about 5 grams per 10 minutes.

3.  The composition defined in claim 1 wherein the ester is an acrylate or a methaciylate and is present in the copolymer in an amount of 15 to 25 percent by weight.

4. The composition defined in claim 1 wherein the polyethylene glycol has a molecular weight in the range of 5000 to 30,000 and is present in an amount of 0.05 to 0.2 part by weight.

5. The composition defined in claim 1 comprising:

(i) a homopolymer of ethylene made by a high pressure process having a density in the range of 0.860 to 0.940 gram per cubic centimeter and a melt index in the range of about 1 to about 5 grams per 10 minutes, and, based on 100 parts by weight of component (i),
(ii) 3 to 8 parts by weight of a copolymer of ethylene and an acrylic acid ester, said ester being an acrylate and having 4 to 7 carbon atoms, and being present in the copolymer in an amount of 15 to 25 percent by weight based on the weight of the copolymer with the proviso that the ester is present in an amount of 0.2 to 5 parts by weight based on 100 parts by weight of component (i); and
(iii) 0.05 to 0.2 part by weight of a polyethylene glycol having a molecular weight in the range of 5000 to 30,000.

6. A cable comprising one or more electrical conductors or a core of electrical conductors, each conductor or core being surrounded by an insulating composition comprising:

(i) a homopolymer of ethylene made by a high pressure process, and, based on 100 parts by weight of component (i),
(ii) 2 to 15 parts by weight of a copolymer of ethylene and an acrylic acid ester or methacrylic acid ester, said ester being present in the copolymer in an amount of 10 to 30 percent by weight based on the weight of the copolymer; and
(iii) 0.03 to 0.3 part by weight of a polyethylene glycol having a molecular weight in the range of 1000 to 100,000.

7. The cable defined in claim 6 wherein the homopolymer of ethylene has a density in the range of 0.860 to 0.940 gram per cubic centimeter and a melt index in the range of about 1 to about 5 grams per 10 minutes.

8. The cable defined in claim 6 wherein the ester is an acrylate or a methacrylate and is present in the copolymer in an amount of 15 to 25 percent by weight.

9. The cable defined in claim 6 wherein the polyethylene glycol has a molecular weight in the range of 5000 to 30,000 and is present in an amount of 0.05 to 0.2 part by weight.

10. The cable defined in claim 6 comprising one or more electrical conductors or a core of electrical conductors, each conductor or core being surrounded by an insulating composition comprising:

(i) a homopolymer of ethylene made by a high pressure process having a density in the range of 0.860 to 0.940 gram per cubic centimeter and a melt index in the range of about 1 to about 5 grams per 10 minutes, and, based on 100 parts by weight of component (i),
(ii) 3 to 8 parts by weight of a copolymer of ethylene and an acrylic acid ester, said ester being an acrylate and having 4 to 7 carbon atoms, and being present in the copolymer in an amount of 15 to 25 percent by weight based on the weight of the copolymer with the proviso that the ester is present in an amount of 0.2 to 5 parts by weight based on 100 parts by weight of component (i); and
(iii) 0.05 to 0.2 part by weight of a polyethylene glycol having a molecular weight in the range of 5000 to 30,000.

**Patentansprüche**

1. Zusammensetzung, die folgendes umfaßt:

(i) ein durch ein Hochdruckverfahren hergestelltes Homopolymer von Ethylen und, bezogen auf 100 Gewichtsteile von Komponente (i),

(ii) 2 bis 15 Gewichtsteile eines Copolymers von Ethylen und einem Acrylsäureester oder Methacrylsäureester, wobei der Ester in dem Copolymer, bezogen auf das Gewicht des Copolymers, in einer Menge von 10 bis 30 Gew.-% vorhanden ist; und

(iii) 0,03 bis 0,3 Gewichtsteile eines Polyethylenglycols mit einem Molekulargewicht im Bereich von 1000 bis 100.000.

**2.** Zusammensetzung nach Anspruch 1, bei der das Homopolymer von Ethylen eine Dichte im Bereich von 0,860 bis 0,940 Gramm pro Kubikzentimeter und einen Schmelzindex im Bereich von etwa 1 bis etwa 5 Gramm pro 10 Minuten hat.

**3.** Zusammensetzung nach Anspruch 1, bei der der Ester ein Acrylat oder ein Methacrylat ist und in dem Copolymer in einer Menge von 15 bis 25 Gew.-% vorhanden ist.

**4.** Zusammensetzung nach Anspruch 1, bei der das Polyethylenglycol ein Molekulargewicht im Bereich von 5000 bis 30.000 hat und in einer Menge von 0,05 bis 0,2 Gewichtsteilen vorhanden ist.

**5.** Zusammensetzung nach Anspruch 1, die folgendes umfaßt:

(i) ein durch ein Hochdruckverfahren hergestelltes Homopolymer von Ethylen mit einer Dichte im Bereich von 0,860 bis 0,940 Gramm pro Kubikzentimeter und einem Schmelzindex im Bereich von etwa 1 bis etwa 5 Gramm pro 10 Minuten und, bezogen auf das Gewicht von Komponente (i),

(ii) 3 bis 8 Gewichtsteile eines Copolymers von Ethylen und einem Acrylsäureester, wobei der Ester ein Acrylat ist und 4 bis 7 Kohlenstoffatome aufweist und in dem Copolymer, bezogen auf das Gewicht des Copolymers, in einer Menge von 15 bis 25 Gew.-% vorhanden ist mit der Maßgabe, daß der Ester, bezogen auf 100 Gewichtsteile von Komponente (i), in einer Menge von 0,2 bis 5 Gewichtsteilen vorhanden ist; und

(iii) 0,05 bis 0,2 Gewichtsteile eines Polyethylenglycols mit einem Molekulargewicht im Bereich von 5000 bis 30.000.

**6.** Kabel mit einem oder mehreren elektrischen Leitern oder einem Kern aus elektrischen Leitern, wobei jeder Leiter oder Kern von einer isolierenden Zusammensetzung umgeben ist, die folgendes umfaßt:

(i) ein durch ein Hochdruckverfahren hergestelltes Homopolymer von Ethylen und, bezogen auf 100 Gewichtsteile von Komponente (i),

(ii) 2 bis 15 Gewichtsteile eines Copolymers von Ethylen und einem Acrylsäureester oder Methacrylsäureester, wobei der Ester in dem Copolymer, bezogen auf das Gewicht des Copolymers, in einer Menge von 10 bis 30 Gew.-% vorhanden ist; und

(iii) 0,03 bis 0,3 Gewichtsteile eines Polyethylenglycols mit einem Molekulargewicht im Bereich von 1000 bis 100.000.

**7.** Kabel nach Anspruch 6, bei dem das Homopolymer von Ethylen eine Dichte im Bereich von 0,860 bis 0,940 Gramm pro Kubikzentimeter und einen Schmelzindex im Bereich von etwa 1 bis etwa 5 Gramm pro 10 Minuten hat.

**8.** Kabel nach Anspruch 6, bei dem der Ester ein Acrylat oder ein Methacrylat ist und in dem Copolymer in einer Menge von 15 bis 25 Gew.-% vorhanden ist.

**9.** Kabel nach Anspruch 6, bei dem das Polyethylenglycol ein Molekulargewicht im Bereich von 5000 bis 30.000 hat und in einer Menge von 0,05 bis 0,2 Gewichtsteilen vorhanden ist.

**10.** Kabel nach Anspruch 6 mit einem oder mehreren elektrischen Leitern oder einem Kern aus elektrischen Leitern, wobei jeder Leiter oder Kern von einer isolierenden Zusammensetzung umgeben ist, die folgendes umfaßt:

(i) ein durch ein Hochdruckverfahren hergestelltes Homopolymer von Ethylen mit einer Dichte im Bereich von 0,860 bis 0,940 Gramm pro Kubikzentimeter und einem Schmelzindex im Bereich von etwa 1 bis etwa 5 Gramm pro 10 Minuten und, bezogen auf 100 Gewichtsteile von Komponente (i),

(ii) 3 bis 8 Gewichtsteile eines Copolymers von Ethylen und einem Acrylsäureester, wobei der Ester ein Acrylat ist und 4 bis 7 Kohlenstoffatome aufweist und in dem Copolymer, bezogen auf das Gewicht des Copolymers, in einer Menge von 15 bis 25 Gew.-% vorhanden ist mit der Maßgabe, daß der Ester, bezogen auf 100 Gewichtsteile von Komponente (i), in einer Menge von 0,2 bis 5 Gewichtsteilen vorhanden ist; und

(iii) 0,05 bis 0,2 Gewichtsteile eines Polyethylenglycols mit einem Molekulargewicht im Bereich von 5000 bis 30.000.

**Revendications**

1. Composition comprenant :

   a) un homopolymère d'éthylène, obtenu selon un procédé haute pression,
   et pour 100 parties en poids de composant (a),
   b) de 2 à 15 parties en poids d'un copolymère d'éthylène et d'un ester d'acide acrylique ou d'acide méthacrylique, lequel ester représente de 10 à 30 % du poids du copolymère,
   c) et de 0,03 à 0,3 partie en poids d'un polyéthylèneglycol dont la masse molaire vaut de 1 000 à 100 000.

2. Composition conforme à la revendication 1, dans laquelle l'homopolymère d'éthylène présente une masse volumique de 0,860 à 0,940 g/cm$^3$ et un indice de fluidité à chaud d'à peu près 1 à 5 g/10 min.

3. Composition conforme à la revendication 1, dans laquelle l'ester est un acrylate ou un méthacrylate et représente de 15 à 25 % du poids du copolymère.

4. Composition conforme à la revendication 1, dans laquelle il y a de 0,05 à 0,2 partie en poids d'un polyéthylèneglycol dont la masse molaire vaut de 5 000 à 30 000.

5. Composition conforme à la revendication 1, qui comprend :

   a) un homopolymère d'éthylène, obtenu selon un procédé haute pression, qui présente une masse volumique de 0,860 à 0,940 g/cm$^3$ et un indice de fluidité à chaud d'à peu près 1 à 5 g/10 min,
   et pour 100 parties en poids de composant (a),
   b) de 3 à 8 parties en poids d'un copolymère d'éthylène et d'un ester d'acide acrylique, lequel ester est un acrylate dont la molécule comporte de 4 à 7 atomes de carbone, et représente de 15 à 25 % du poids du copolymère, pourvu que la proportion de cet ester vaille de 0,2 à 5 parties en poids pour 100 parties en poids de composant (a),
   c) et de 0,05 à 0,2 parties en poids d'un polyéthylèneglycol dont la masse molaire vaut de 5 000 à 30 000.

6. Câble comportant un ou plusieurs conducteurs électriques ou une âme de conducteurs électriques, où chaque conducteur ou l'âme est enrobé d'une composition isolante comprenant :

   a) un homopolymère d'éthylène, obtenu selon un procédé haute pression,
   et pour 100 parties en poids de composant (a),
   b) de 2 à 15 parties en poids d'un copolymère d'éthylène et d'un ester d'acide acrylique ou d'acide méthacrylique, lequel ester représente de 10 à 30 % du poids du copolymère,
   c) et de 0,03 à 0,3 parties en poids d'un polyéthylèneglycol dont la masse molaire vaut de 1 000 à 100 000.

7. Câble conforme à la revendication 6, dans lequel l'homopolymère d'éthylène présente une masse volumique de 0,860 à 0,940 g/cm$^3$ et un indice de fluidité à chaud d'à peu près 1 à 5 g/10 min.

8. Câble conforme à la revendication 6, dans lequel l'ester est un acrylate ou un méthacrylate et représente de 15 à 25 % du poids du copolymère.

9. Câble conforme à la revendication 6, dans lequel le polyéthylèneglycol présente une masse molaire de 5 000 à 30 000 et se trouve en une quantité de 0,05 à 0,2 partie en poids.

10. Câble conforme à la revendication 6, comportant un ou plusieurs conducteurs électriques ou une âme de conducteurs électriques, où chaque conducteur ou l'âme est enrobé d'une composition isolante comprenant :

    a) un homopolymère d'éthylène, obtenu selon un procédé haute pression, qui présente une masse volumique de 0,860 à 0,940 g/cm$^3$ et un indice de fluidité à chaud d'à peu près 1 à 5 g/10 min,
et pour 100 parties en poids de composant (a),

b) de 3 à 8 parties en poids d'un copolymère d'éthylène et d'un ester d'acide acrylique, lequel ester est un acrylate dont la molécule comporte de 4 à 7 atomes de carbone, et représente de 15 à 25 % du poids du copolymère, pourvu que la proportion de cet ester vaille de 0,2 à 5 parties en poids pour 100 parties en poids de composant (a),

c) et de 0,05 à 0,2 parties en poids d'un polyéthylèneglycol dont la masse molaire vaut de 5 000 à 30 000.